# EUROPEAN PATENT SPECIFICATION

(11) **EP 1 693 682 B1**
(45) Date of publication and mention of the grant of the patent: **09.04.2008**
(21) Application number: 05003516.1
(22) Date of filing: 18.02.2005
(51) Int. Cl.: G01S 5/14, G01S 1/00

(54) **A system with co-located GPS receiver and cellular transceiver controllable by an external micro-controller via an interface**
Ein System mit benachbartem GPS-Empfänger und zellularem Sende-/Empfänger steuerbar durch einen externen Mikrokontroller über eine Schnittstelle
Un système avec un récepteur GPS et un émetteur-recepteur cellulaire coexistants controllable par un micro-contrôleur extérieur par l'intermediare d'une interface

(43) Date of publication of application: 23.08.2006
(73) Proprietor: SIEMENS AKTIENGESELLSCHAFT, 80333 München (DE)
(72) Inventor: Schröter, Hartmut, 14656 Brieselang (DE)

(56) References cited:
- EP-A- 1 132 713
- WO-A-99/44186
- US-B1- 6 751 467

## Description

### Field of the invention

The invention relates to systems controllable by an external microcontroller via an interface and comprising a radio module and a GPS receiver.

### Background art

WO 99/44186 discloses a system for automatically assigning the driver of an available operator driven mobile unit to a user, the system comprising:
a) a plurality of portable user terminals each carried by a user and having a location detection device for determining the user's location and a user interface for enabling its user to place a new user request and for providing him with at least an indication that the operator of an available operator driver mobile unit has been assigned to him
b) a plurality of corresponding operator terminals
c) a control center for automatically assigning the operator of an available operator driven mobile unit to a user in response to a new user request placed by him in accordance with a prevailing assignment protocol.

In order to make the system work, position information is thus sent from the location detection device to the control center. On the other hand information from the control center to the location detection device is not required to make the system work and therefore not disclosed.

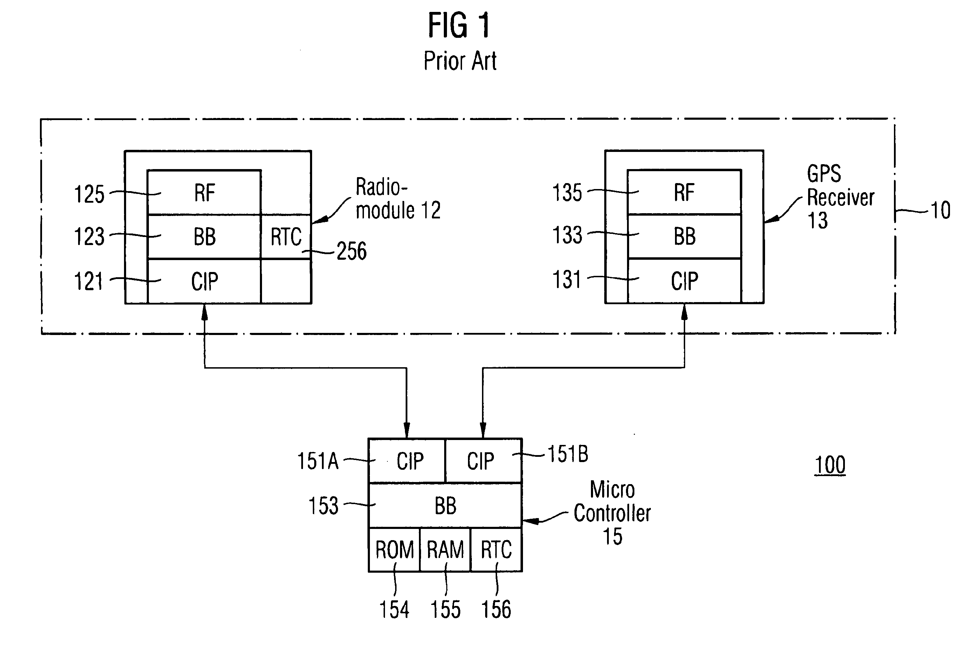

Figure 1 shows a system 100 comprising a subsystem 10 further comprising a radio module 12 and a GPS receiver 13, and a microcontroller 15 for controlling the devices of the subsystem 10. The radio module 12 and the GPS receiver 13 both comprise an interface 121, 131 for command input and data output. Similarly, the microcontroller 15 comprises an interface 151A, 151B for each device of the subsystem 10 for command output and data input.

The microcontroller 15 can be embedded or integrated in or connected to a terminal, for example. If the terminal is to use the radio module 12, it can do so via the microcontroller 15 wherein applications for interfacing the radio module 12 are executed. The radio module 12 comprises a base band unit 123 that is adapted to execute applications for using the radio frequency part 125. The base band unit 123 comprises an internal real time clock 256. Then the necessary communication between the microcontroller 15 and the radio module 12, in order to create a speech or data communication, for example, is carried out between the serial interface 151A in the microcontroller 15 and the serial interface 121 in the radio module 12.

For a satellite positioning functionality, a GPS receiver 13 is connected in a similar manner like the radio module 12, via its serial interface 131 to the other serial interface 151B of the microcontroller 15. The GPS receiver 13 further comprises a radio frequency part 135 and a GPS base band unit 133.

Traditionally, the local data interface of a GPS receiver complies with one of the NMEA standards. NMEA standards NMEA-0180, 0182 and 0183 define electrical interfaces and data protocols for communications between marine instrumentation, for example. These NMEA standards recommend that for a GPS receiver, the interface should comply with RS-232 or EIA-422. In practice, as a consequence, the data connection between a GPS receiver and a device communicating with the GPS receiver requires one data line only and can be carried out using one connector.

The interfaces through which the radio module 12 and of the GPS receiver 13 are controllable by the microcontroller 15 are serial interfaces. For communication, usually the standardized AT command language is used between the microcontroller 15 and the radio module 12. The command language of the GPS receiver 13 is usually the NMEA protocol.

If the device using the system 100 comprising the subsystem 10 and microcontroller 15 needs to use both the radio module 12 and the GPS receiver 13, it would, on its application level, need to process and synchronize data from and to both of these devices. Such a case is encountered, for example, when Assisted GPS is used where a cellular network sends synchronization information, using which the necessary synchronization of the GPS receiver 13 can be performed essentially faster.

The synchronization information is first received from the cellular network by the radio module 12 which then passes it either through the microcontroller 15 to an application running in the terminal or to an application running in the microcontroller 15. The application then in turn passes this information to the GPS receiver 13 through the microcontroller 15.

The synchronization information for a GPS receiver 13 comprises many different kinds of data to enable the GPS receiver 13 to start with the positioning. This information includes in addition to current visibility of satellites also the current date and time. For this reason a real time clock is necessary. A simple GPS receiver 13 nevertheless does not contain an internal real time clock, so the time information has to be available from the microcontroller 15, e.g. from its internal real-time clock 156.

### Summary of the invention

An objective of the invention is to reduce the complexity of microcontroller design. A further objective is to reduce the complexity of design of applications using a satellite positioning system receiver and a radio module.

These objectives can be achieved with a system as set out in independent claims 1 and 7.

The dependent claims describe various advantageous embodiments of the invention.

### Advantages of the invention

If the radio module is adapted to pass messages received via an external interface to the satellite positioning system receiver via an internal interface, to receive messages from the satellite positioning system receiver via an internal interface, and to pass them further to the external interface, the microcontroller can be made simpler because the microcontroller does not need to have an additional interface for the satellite positioning system receiver. This may in turn reduce the complexity of programming devices using the satellite positioning system receiver and the radio module, such as terminals, since they may now use the same interface for sending and receiving messages to and from the satellite positioning system receiver as they use to communicate with the radio module. This is particularly advantageous when the radio module is adapted to work on AT commands (or AT-like commands) and further adapted to pass at least some of the commands in the AT -like command language to the satellite positioning system receiver.

If the satellite positioning system receiver is adapted to use the same real time clock as the radio module, the design of the system can be made easier since the synchronization of two clocks in these devices is not necessary.

When the system comprises a processing unit adapted to control both the radio module and the satellite positioning system receiver, design of devices using the system, especially design of a microcontroller and of a terminal using said microcontroller can be made easier since the number of processors in the system can be reduced. In this way, the controlling of the system or programming of applications can be made easier. Further, costs may be saved because the processing unit can overtake the function of the base band unit of the satellite positioning system receiver, a separate base band unit can thus be omitted. Furthermore, then the processing unit can be adapted to perform the functions necessary for network-assisted satellite positioning. In this manner, information how the network-assisted satellite positioning functionality works does not need to be disclosed to clients any more, because the satellite positioning system receiver does not need to be transparent any more since the functionality can wholly be implemented out in the system.

If the processing unit is adapted to control the radio module with a first subset of commands received, and the satellite positioning system receiver with a second subset of commands received, the interfacing can be made simpler, and even more so if commands in the first subset and in the second subset have a common format. As an especially suitable form, NMEA commands are mapped on AT commands .

If the processing unit is adapted to: i) synchronize the activation of the satellite positioning system receiver with that the radio module, or ii) synchronize setting of the satellite positioning system receiver to a standby state with setting of the radio module to a standby state, energy can be saved, especially if the satellite positioning system receiver is to be used as when network-assisted satellite positioning system receiver. For the network-assisted satellite positioning functionality, synchronization information should be received from a cellular network. Therefore, a connection to the network through the radio module is a prerequisite for using the satellite positioning system receiver with the network-assisted satellite positioning functionality.

### List of Figures

In the following, the invention is described in more detail with reference to examples shown in the Figures of the accompanying drawings, of which:
Figure 1 shows a prior system comprising a radio module and a GPS receiver;
Figure 2 shows the first embodiment of the invention; and
Figure 3 shows the second embodiment of the invention.

Same reference numerals refer to similar structural elements throughout the drawings.

### Detailed description

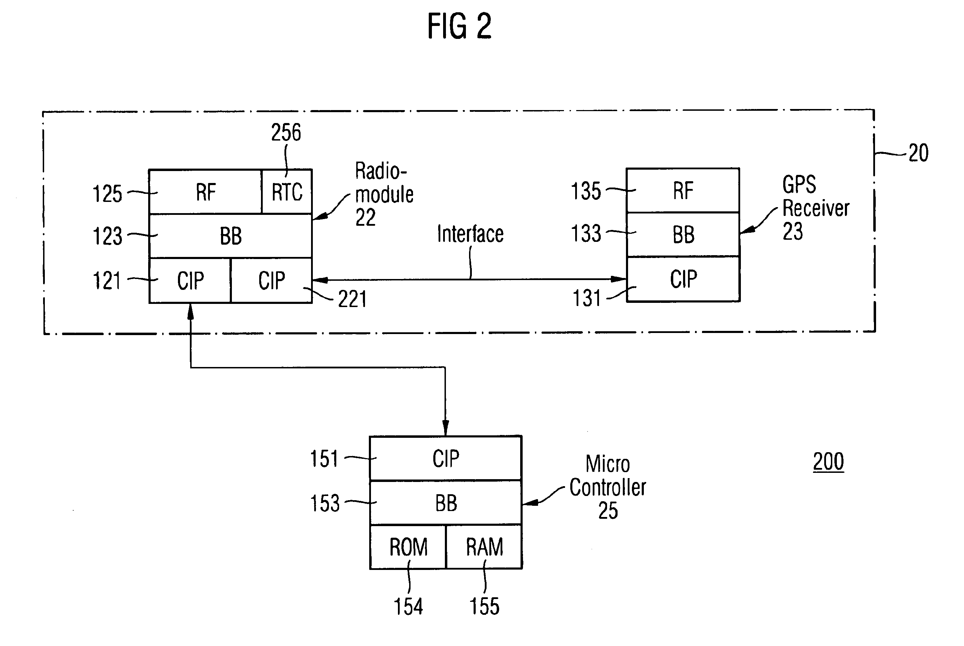

Figure 2 shows the first embodiment of the invention. The radio module 22 preferably comprises an internal interface 221, through which it is connected to an internal interface 131 of the GPS receiver 23. The internal interfaces 131, 221 are preferably serial interfaces.

The radio module 22 may receive data via interface 121 from the microcontroller 25 which passes it to the interface 121 via its interface 151. Both interfaces 121, 151 are preferably serial interfaces.

The radio module 22 acts as master and controls the GPS receiver 23. The controlling is performed in both terms of data and energy balance. This means that the radio module 22 can synchronize the GPS receiver 23 with its own energy saving behavior.

The program code executable in the base band unit 123 of the radio module 22 is capable to initialize the GPS receiver 23, to process data received from the GPS receiver 23 and to send necessary data to it.

Data from a microcontroller 25 to the GPS receiver 23 and from the GPS receiver 23 to the microcontroller 25 is communicated, preferably instead of using the NMEA format, reformulated and provided as AT commands.

Data, such as date and time, that can be used to synchronize the GPS receiver 23, are received by the radio module 22 from the microcontroller 25. Then they are extracted by the RTC 256 of the radio module 22. The cycle frequency, with which the GPS receiver 23 may pass position data to the radio module 22, is defined. Furthermore, the operation times of the GPS receiver 23 are synchronized to those of the radio module 22 in order to reduce the current consumption of the system 20.

An Assisted GPS application executed in the radio module 22 sends to the GPS receiver 23 GPS assistance information that the radio module 22 has received from a cellular network. The GPS positioning results received by the radio module 22 from the GPS receiver 23 are first buffered and then transferred to the microcontroller 25. Preferably, the GPS positioning results are given to the microcontroller 25 as an answer to an AT command.

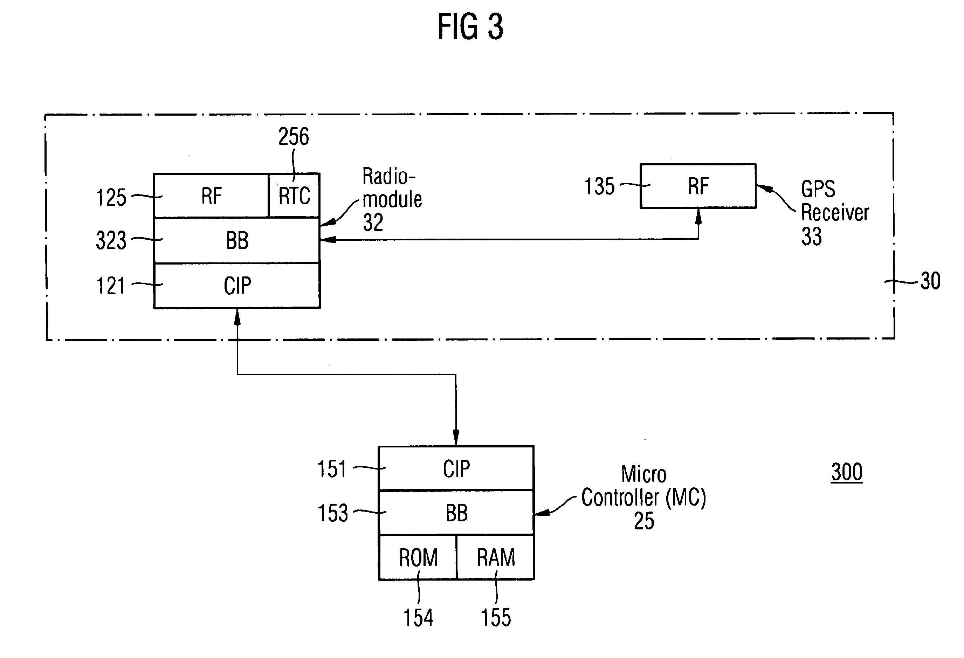

Figure 3 shows a modification of the embodiment of the systems 20 and 200 shown in Figure 2.

An interface is defined between the radio module 32 and the GPS receiver 33. The radio frequency part 135 of the GPS receiver 33 is now directly controlled by the base band unit 323 of the radio module 32. Program code performing the functions of the program code of the GPS base band unit 133 is executed in the base band 323 of the radio module 32. In this manner, there is no need for a separate GPS base band unit 133. Furthermore, ROM and RAM of the GPS receiver 33 can be omitted. The Real Time Clock 156 of the microcontroller **15** may also be omitted.

The principles underlying the invention can be used for systems comprising other kinds of radio modules than those for GSM. For example, radio modules for communication with a CDMA or WLAN network are also possible either alone or in combination with each other or GSM.

In the example above, the Global Positioning System (GPS) was used as an example of a satellite positioning system. The invention is nevertheless not limited to the GPS system but can be used with any other satellite positioning system instead of or in addition to the GPS system. The planned European Galileo navigation system is a further example of a suitable satellite positioning system.

Therefore, instead of using a GPS receiver, another satellite positioning system receiver can be used. Furthermore, in the context of such another satellite positioning system, instead of or in addition to a network-assisted GPS functionality a network-assisted satellite positioning functionality can be used.

## Claims

1. A system (20; 30) controllable by an external microcontroller (25) via an interface (121) external to the system (20; 30); comprising:
- a radio module (22; 32); and
- a satellite positioning system receiver (23; 33); the radio module (22; 32) is adapted:
- to receive messages from the satellite positioning system receiver (23; 33) via an internal interface (221, 323) and pass them further to the external interface (121) and
- to pass messages received via the external interface (121) to the satellite positioning system receiver (23; 33) via the internal interface (221; 323);
**characterized in that**:
the radio module (22; 32) comprises a processing unit **(123,** 323) adapted to control both the radio module (22, 32) and the satellite positioning system receiver (23, 33), and the processing unit **(123,** 323) is adapted to execute a program code capable to initialize the satellite positioning system receiver (33) and to control the radio module (32) with a first subset of commands received, and the satellite positioning system receiver (33) with a second subset of commands received;
whereby the commands in the first subset and in the second subset have a common format.

2. A system (20; 30) according to claim 1, wherein: the commands are AT commands.

3. A system (20; 30) according to claim 1 or 2, wherein: the radio module (22, 32) comprises a real time clock (256) which both the radio module (22; 32) and the satellite positioning system receiver (23; 33) are adapted to use.

4. A system (30) according to any one of claims **1** to **3,** wherein: the processing unit **(123,** 323) is adapted to: i) synchronize the activation of the satellite positioning system receiver (33) with that of the radio module (32), or ii) synchronize setting the satellite positioning system receiver (33) to a standby state with setting the radio module (32) to a standby state.

5. A system (20; 30) according to any one of the preceding claims, **wherein:** the **processing unit** (123; 323) is adapted to transmit or receive data to or from a cellular network.

6. A system (20; 30) according to any one of the preceding claims, wherein: the satellite positioning system receiver (23; 33) is a GPS receiver, and/or a Galileo-system receiver.

7. A system (20; 30) according to any one of the preceding claims 1 to **6**; and a microcontroller (25) adapted to control the system (20; 30).

## Patentansprüche

1. System (20; 30), das von einer externen Mikrosteuerung (25) über eine Schnittstelle (121) außerhalb des Systems (20; 30) gesteuert werden kann, umfassend:
- ein Funkmodul (22; 32); und
- einen Satellitenpositionierungssystem-Empfänger (23; 33);
wobei das Funkmodul (22; 32) zu Folgendem geeignet ist:
- Empfangen von Nachrichten von dem Satellitenpositionierungssystem-Empfänger (23; 33) über eine interne Schnittstelle (221; 323) und Weiterübertragen davon an die externe Schnittstelle (121); und
- Übertragen von Nachrichten, die über die externe Schnittstelle (121) empfangen werden, an den Satellitenpositionierungssystem-Empfänger (23; 33) über die interne Schnittstelle (221; 323);
**dadurch gekennzeichnet, dass**:
das Funkmodul (22; 32) eine Verarbeitungseinheit (123, 323) umfasst, die geeignet ist, sowohl das Funkmodul (22, 32) als auch den Satellitenpositionierungssystem-Empfänger (23, 33) zu steuern, und die Verarbeitungseinheit (123, 323) geeignet ist, einen Programmcode auszuführen, der in der Lage ist, den Satellitenpositionierungssystem-Empfänger (33) zu initialisieren und das Funkmodul (32) mit einem ersten untergeordneten Satz von empfangenen Befehlen und den Satellitenpositionierungssystem-Empfänger (33) mit einem zweiten untergeordneten Satz von empfangenen Befehlen zu steuern;
wobei die Befehle in dem ersten untergeordneten Satz und in dem zweiten untergeordneten Satz ein gemeinsames Format aufweisen.

2. System (20; 30) nach Anspruch 1, wobei die Befehle AT-Befehle sind.

3. System (20; 30) nach Anspruch 1 oder 2, wobei das Funkmodul (22, 32) einen Echtzeittaktgeber (256) aufweist, den sowohl das Funkmodul (22; 32) als auch der Satellitenpositionierungssystem-Empfänger (23; 33) benutzen können.

4. System (30) nach einem der Ansprüche 1 bis 3, wobei die Verarbeitungseinheit (123, 323) zu Folgendem geeignet ist: i) Synchronisieren der Aktivierung des Satellitenpositionierungssystem-Empfängers (33) mit derjenigen des Funkmoduls (32) oder ii) Synchronisieren der Einstellung des Satellitenpositionierungssystem-Empfängers (33) auf einen Bereitschaftszustand mit der Einstellung des Funkmoduls (32) auf einen Bereitschaftszustand.

5. System (20; 30) nach einem der vorherigen Ansprüche, wobei die Verarbeitungseinheit (123; 323) geeignet ist, um Daten an ein zellulares Netz zu senden oder sie davon zu empfangen.

6. System (20; 30) nach einem der vorherigen Ansprüche, wobei der Satellitenpositionierungssystem-Empfänger (23; 33) ein GPS-Empfänger und/oder ein Galileo-System-Empfänger ist.

7. System (20; 30) nach einem der vorherigen Ansprüche 1 bis 6; und eine Mikrosteuerung (25), die zum Steuern des Systems (20; 30) geeignet ist.

## Revendications

1. Système (20 ; 30) pouvant être commandé par un microcontrôleur (25) via une interface (121) extérieure au système (20 ; 30), comprenant :
- un module radio (22 ; 32) ; et
- un récepteur (23 ; 33) d'un système de positionnement par satellite ;
le module radio (22 ; 32) étant apte à :
- recevoir des messages du récepteur (23 ; 33) du système de positionnement par satellite d'une interface (221, 323) interne et les faire passer de là vers l'interface (121) externe ; et
- faire passer des messages reçus via l'interface (121) externe vers le récepteur (23 ; 33) du système de positionnement par satellite via l'interface (221 ; 323) interne ;
**caractérisé en ce que** :
le module radio (22 ; 32) comprend une unité (123, 323) de traitement apte à commander à la fois le module radio (22, 32) et le récepteur (23, 33) du système de positionnement par satellite, et **en ce que** l'unité (123, 323) de traitement est apte à exécuter un code de programme capable d'initialiser le récepteur (33) du système de positionnement par satellite et à commander le module radio (32) avec un premier sous-ensemble de commandes reçues, et le récepteur (33) du système de positionnement par satellite avec un deuxième sous-ensemble de commandes reçues ;
les commandes du premier sous-ensemble et du deuxième sous-ensemble ayant un format commun.

2. Système (20 ; 30) suivant la revendication 1, dans lequel les commandes sont des commandes AT.

3. Système (20 ; 30) suivant la revendication 1 ou 2, dans lequel le module radio (22, 32) comprend une horloge (256) temps réel que le module radio (22 ; 32) et le récepteur (23 ; 33) du système de positionnement par satellite sont tous deux aptes à utiliser.

4. Système (30) suivant l'une quelconque des revendications 1 à 3, dans lequel l'unité (123, 323) de traitement est apte à : i) synchroniser l'activation du récepteur (33) du système de positionnement par satellite avec celle du module radio (32), ou ii) synchroniser le réglage du récepteur (33) du système de positionnement par satellite dans un état d'attente avec le réglage du module radio (32) dans un état d'attente.

5. Système (20 ; 30) suivant l'une quelconque des revendications précédentes, dans lequel l'unité (123 ; 323) de traitement est apte à émettre ou recevoir des données vers ou en provenance d'un réseau cellulaire.

6. Système (20 ; 30) suivant l'une quelconque des revendications précédentes, dans lequel le récepteur (23 ; 33) du système de positionnement par satellite est un récepteur GPS et/ou un récepteur du système Galiléo.

7. Système (20 ; 30) suivant l'une quelconque des revendications 1 à 6, comprenant un microcontrôleur (25) apte à commander le système (20 ; 30).
